# EUROPEAN PATENT SPECIFICATION

(11) **EP 3 263 861 B1**
(45) Date of publication and mention of the grant of the patent: **07.08.2019**
(21) Application number: 16755865.9
(22) Date of filing: 24.02.2016
(51) Int. Cl.: F01N 3/28, F01N 3/20, H05B 3/12, H05B 3/78, B60K 13/04, B60K 15/03

(54) **HEATING STRUCTURE, PRODUCTION METHOD THEREFOR, AND PUMP MODULE COMPRISING SAME**
HEIZSTRUKTUR, HERSTELLUNGSVERFAHREN DAFÜR UND PUMPENMODUL DAMIT
STRUCTURE DE CHAUFFAGE, SON PROCÉDÉ DE PRODUCTION, ET MODULE DE POMPE LA COMPRENANT

(30) Priority: 26.02.2015 KR 20150027573
(43) Date of publication of application: 03.01.2018
(73) Proprietor: Hyundam Industrial Co., Ltd., Asan-si, Chungcheongnam-do 31424 (KR)
(72) Inventor: HWANG, Yong-Taek, Asan-si Chungcheongnam-do 31424 (KR); JEON, Chan-Yo, Asan-si Chungcheongnam-do 31424 (KR); CHO, Bu-Hyeon, Asan-si Chungcheongnam-do 31424 (KR)
(74) Representative: Walaski, Jan Filip
(86) International application number: PCT/KR2016/001780
(87) International publication number: WO 2016/137215

(56) References cited:
- EP-A1- 2 299 079
- EP-A1- 2 650 497
- EP-A1- 2 837 785
- WO-A1-2015/185568
- JP-A- 2013 015 140
- KR-A- 20120 135 916
- KR-A- 20140 060 802
- KR-A- 20140 076 386
- KR-A- 20140 076 386
- KR-A- 20140 095 563
- KR-B1- 101 490 931

## Description

The present invention relates to a heating structure, a production method therefor, and a pump module including the same.

In general, an exhaust system for a diesel engine includes an exhaust gas post-processing unit, such as a selective catalyst reduction (SCR) unit, a diesel oxidation catalyst (DOC) unit, a catalyzed particulate filter (CPF), so as to reduce a nitrogen oxide (NOx) contained in exhaust gas.

Among them, an exhaust gas post-processing unit that applies SCR (hereinafter, referred to as an 'SCR unit') performs a function of injecting a reductant, such as an aqueous urea solution, into an inside of an exhaust pipe to reduce NOx in the exhaust gas into nitrogen and oxygen.

That is, in the SCR unit, when the reductant is injected into the inside of the exhaust pipe, the reductant can be changed to ammonia (NH₃) by heat of the exhaust gas, and NOx can be reduced into nitrogen gas (N₂) and water (H₂O) as a catalyst reaction of NOx in the exhaust gas and ammonia using an SCR catalyst.

In this way, a system for supplying the aqueous urea solution to the SCR unit is required to inject the aqueous urea solution into the inside of the exhaust pipe using the SCR unit.

The system for supplying the aqueous urea solution basically includes a urea tank for storing the aqueous urea solution and a pump module that is disposed in the urea tank and supplies the aqueous urea solution to the SCR unit.

In the related art, as specific gravity of the aqueous urea solution increases in the winter season, freezing is sequentially performed from a lower portion of the urea tank, and as the volume of the aqueous urea solution expands due to freezing, great deformation may occur in an upper portion of the urea tank.

In addition, in the related art, a heating device and a pump are installed to be spaced by a predetermined distance apart from each other. Thus, it is not easy to melt the frozen aqueous urea solution that is present in the pump.

EP2837785 discloses a pump unit and EP2299079 discloses a cartridge having a filter device filtering liquid.

The present invention is directed to providing a heating structure for stably pumping a strongly alkaline aqueous urea solution using an injector and melting the frozen aqueous urea solution in the winter season, a production method therefor, and a pump module including the same.

According to the invention, there is provided a pump module as set out in claim 1.

One aspect of the present invention provides a heating structure, which is for heating a pump installed in a tank so as to discharge a liquid stored in the tank to the outside of the tank, including: a flange installed on one surface of the interior of the tank; and a heating member coupled to one surface of the flange and provided on one side thereof with an accommodation groove in which at least a part of the pump is accommodated, wherein a first discharge tube of the pump having at least a part thereof accommodated in the accommodation groove extends toward the flange and is connected to a second discharge tube formed on the other surface of the flange outside the tank, and the heating member is formed to heat at least a part of the pump, at least a part of the first discharge tube, and at least a part of the second discharge tube.

The heating member may include: a body that extends in an inward direction of the tank; and a positive temperature coefficient (PTC) device coupled to an outside surface of the body, and the accommodation groove may be formed in an end that opens in the inward direction of the tank of the body.

The heating structure may further include a cover coupled to the body so as to cover and seal the PTC device.

A protrusion may be formed on one side of the PTC device and may protrude toward the flange, and a plug connected to the PTC device may be formed on an end of the protrusion, and a first groove may be recessed in the one surface of the flange so that the protrusion is inserted into the first groove, and a socket corresponding to the plug may be formed in a center of the first groove.

The heating structure may further include a first sealing member formed on an outer circumferential surface of the protrusion.

The heating structure may further include: a mounting groove formed in one side surface of the body so that the PTC device is inserted into the body through the mounting groove; and a wall portion formed at a circumference of the mounting groove, wherein the cover may be coupled to the wall portion to cover and seal the PTC device and to fix the PTC device to the body.

The heating structure may further include a gasket disposed between the wall portion and the cover and sealing a space between the wall portion and the cover.

The heating structure may further include a power cutoff unit that cuts off power supplied to the PTC device when the power cutoff unit is electrically connected to the PTC device and the PTC device is at a Curie temperature or higher.

The heating structure may further include a temperature sensor that is installed on one surface of the flange and detects a temperature of the liquid.

A second groove may be formed in one surface of the flange to accommodate at least a part of the first discharge tube, and one end of the body capable of heating at least a part of the first discharge tube may be accommodated in the second groove together with at least a part of the first discharge tube.

One end of the body may be formed to heat a part of the second discharge tube.

A connection tube may be formed in the second groove of the flange, may protrude from an interior of the second groove of the flange, may extend toward the heating member and may connect the first discharge tube to the second discharge tube.

The heating structure may further include a linear discharge tube coupled to the first discharge tube, wherein the discharge tube may be disposed in the connection tube while being coupled to the first discharge tube.

The heating structure may further include a second sealing member formed at an outer circumferential surface of the discharge tube so as to seal a space between the discharge tube and the connection tube.

The tank may be a storage tank for storing an aqueous urea solution. According to the present invention , the pump module includes a pump installable in a storage tank so as to discharge a liquid stored in the storage tank to an outside of the storage tank; the above-described heating structure disposed to surround an outside surface of the pump; a coupling member coupled to an outside of the pump so as to couple the heating structure to the flange; and a filter coupled to the flange to surround the pump, the coupling member and the heating structure and filtering the liquid supplied to the pump.

There is also provided a production method for a heating structure, including: providing a body having a mounting groove formed in one side surface thereof and a wall portion provided at a circumference of the mounting groove; inserting a positive temperature coefficient (PTC) device into the mounting groove; installing a gasket at the wall portion and coupling a cover to the wall portion; and injection molding a surface of the body to which the cover is coupled, to form a housing.

### [Advantageous Effects]

In a heating structure according to an embodiment of the present invention and a production method therefor, a frozen aqueous urea solution can be melted using a positive temperature coefficient (PTC) device capable of heating the aqueous urea solution, and damage caused by electrical overload can be prevented.

In a pump module according to an embodiment of the present invention, a strongly alkaline aqueous urea solution can be stably pumped using an injector.

In a heating structure according to an embodiment of the present invention and a pump module including the same, a flange mounted on a lower portion of a tank is provided so that installation of the heating structure in the pump module is simple.

In a heating structure according to an embodiment of the present invention, a body is formed to heat a part of a first discharge tube and a part of a second discharge tube so that the frozen aqueous urea solution that is present in the discharge tube of the pump module can be efficiently melted.

### [Description of Drawings]

FIG. 1 is a perspective view showing a state in which a pump module having a heating structure mounted thereon according to an embodiment of the present invention is installed in a tank.
FIG. 2 is a perspective view of the pump module having the heating structure mounted thereon according to an embodiment of the present invention.
FIG. 3 is a cross-sectional view taken along a line A-A of FIG. 2, wherein arrows represent a flow of a liquid.
FIG. 4 is an exploded perspective view of the heating structure according to an embodiment of the present invention.
FIG. 5 is a cross-sectional view of a flange of the heating structure according to an embodiment of the present invention, wherein arrows represent the flow of the liquid.
FIG. 6 is a perspective view of a heating member of the heating structure according to an embodiment of the present invention.
FIG. 7 is a bottom perspective view of the heating member of the heating structure according to an embodiment of the present invention.
FIG. 8 is a perspective view of a positive temperature coefficient (PTC) device coupled to a body of the heating structure according to an embodiment of the present invention.
FIG. 9 is a perspective view of a pump installed at the heating member of the heating structure according to an embodiment of the present invention.
FIG. 10 is a perspective view of the heating member of the heating structure according to an embodiment of the present invention installed at the flange.
FIG. 11 is a flowchart illustrating a production method for the heating structure, according to an embodiment of the present invention.

### [Modes of the Invention]

Hereinafter, exemplary embodiments of the present invention will be described in detail with reference to the attached drawings in order to enable those of ordinary skill in the art to easily embody and practice the invention. The present invention can be implemented in several different forms and is not limited to the exemplary embodiments disclosed below. In order to clearly describe the present invention, portions irrelevant to the description are omitted in the drawings, and like reference numerals throughout the specification denote like elements.

In the present specification, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. It will be understood that, when a portion such as a layer, a film, a region or a plate is referred to as being "on" another portion, the portion can be "directly on" another portion or on intervening portions. In contrast, when a portion such as a layer, a film, a region or a plate is referred to as being "under" another portion, the portion can be "directly under" another portion or under intervening portions.

Hereinafter, a heating structure according to an embodiment of the present invention and a pump module including the same will be described in more detail with reference to the drawings.

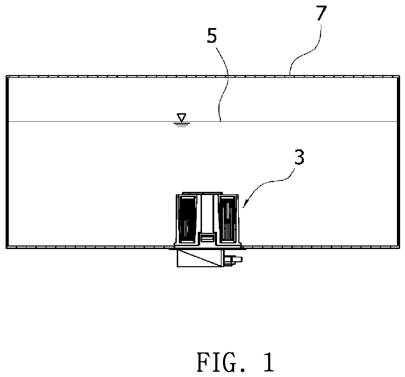

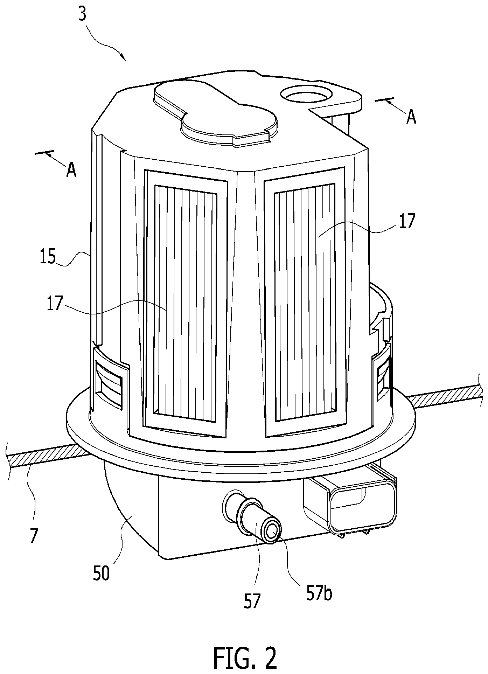

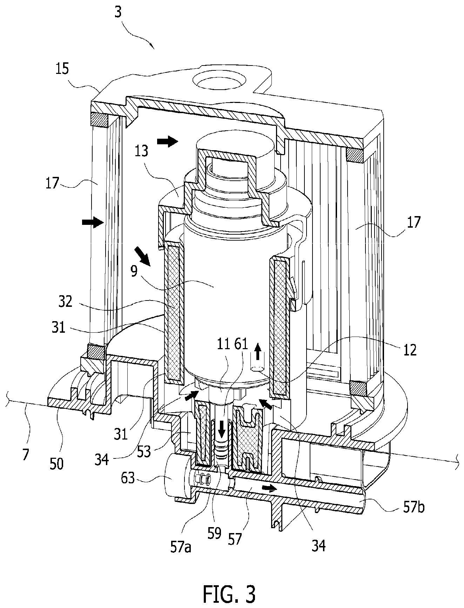

FIG. 1 is a perspective view showing a state in which a pump module having a heating structure mounted thereon according to an embodiment of the present invention is installed in a tank. FIG. 2 is a perspective view of the pump module having the heating structure mounted thereon according to an embodiment of the present invention. FIG. 3 is a cross-sectional view taken along a line A-A of FIG. 2, wherein arrows represent a flow of a liquid.

Referring to FIGS. 1 through 3, a pump module 3 having a heating structure 1 mounted thereon according to an embodiment of the present invention may include a pump 9, the heating structure 1, a coupling member 13, and a filter 15.

In this case, the pump module 3 may be installed in a tank 7 in which a liquid is stored, and may pump the liquid using an injector (not shown) installed outside the tank stably.

In addition, the pump module 3 may perform a function of adjusting the temperature and level of the liquid stored in the tank 7 and filtering the liquid stored in the tank 7 and may melt the frozen liquid using the heating structure 1 installed therein. This enables the frozen liquid to be firstly melted before the pump 9 operates, so that the pump can operate smoothly.

Referring to FIGS. 1 through 3, in an embodiment of the present invention, the liquid stored in the storage tank 7 may be an aqueous urea solution 5 used as a reductant. In this case, the aqueous urea solution 5 is colorless, odorless, nonpoisonous, unburnable, and strongly alkaline (PH 10 or higher) and is mixed in water at the ratio of 32.5%.

A freezing point of the aqueous urea solution 5 that is strongly alkaline is -11.5 °C, and a volume of the aqueous urea solution 5 at the freezing point expands by 11%. Thus, when the aqueous urea solution 5 stored in the pump module is frozen, the volume of the aqueous urea solution expands, which may cause damage of the pump module 3.

Thus, the pump module 3 may be installed in the tank 7 in which the aqueous urea solution is stored, and may pump the strongly alkaline aqueous urea solution using the injector (not shown) installed outside the tank stably.

Referring to FIG. 3, in an embodiment of the present invention, the pump 9 is installed in the tank 7 and pumps the aqueous urea solution 5 stored in the tank 7 to the outside of the tank.

Meanwhile, a suction tube 12 and a first discharge tube 11 of the pump 9 may be formed on a lower side surface of the pump while being adjacent to each other. Thus, the aqueous urea solution 5 is sucked into the pump via the suction tube 12 formed on the lower side surface of the pump and is discharged to the outside of the pump via the first discharge tube 11.

The suction tube 12 and the first discharge tube 11 of the pump 9 are installed adjacent to each other so that the aqueous urea solution 5 suctioned via the suction tube 12 does not pass through a motor (not shown) disposed in the pump but is directly discharged via the first discharge tube 11 and thus the motor can be protected.

Meanwhile, the heating structure 1 according to an embodiment of the present invention is disposed to surround an outside surface of the pump 9. In this case, the heating structure 1 may transfer heat to the pump 9 and may melt the frozen aqueous urea solution 5.

Referring to FIG. 3, in an embodiment of the present invention, the coupling member 13 is provided to couple the heating structure 1 to the pump 9.

In this case, the coupling member 13 may be coupled to the outside of the pump 9 to couple the heating structure 1 to a flange 50 so that the heating structure 1 can be fixed to the interior of the tank 7.

Meanwhile, referring to FIGS. 1 through 3, the filter 15 may be disposed to surround the pump 9, the coupling member 13, and the heating structure 1. In this case, the filter 15 may be coupled to the flange 50, and a plurality of filter media 17 may be disposed on an outside surface of the filter.

In this case, the filter 15 filters the aqueous urea solution 5 stored in the tank 7 using the filter media 17 and supplies the filtered aqueous urea solution 5 to the pump 9, as illustrated in FIG. 3.

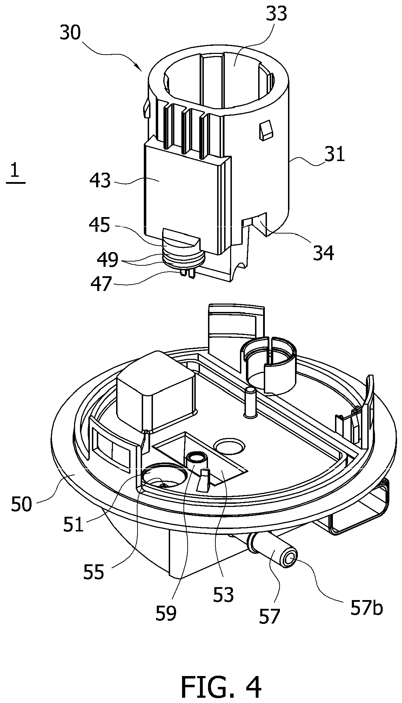

FIG. 4 is an exploded perspective view of a heating structure according to an embodiment of the present invention.

Referring to FIG. 4, the heating structure 1 according to an embodiment of the present invention may include a heating member 30 and the flange 50 having the heating member installed therein. In this case, the heating structure 1 including the heating member 30 may transfer heat to the pump 9 to melt the frozen aqueous urea solution 5.

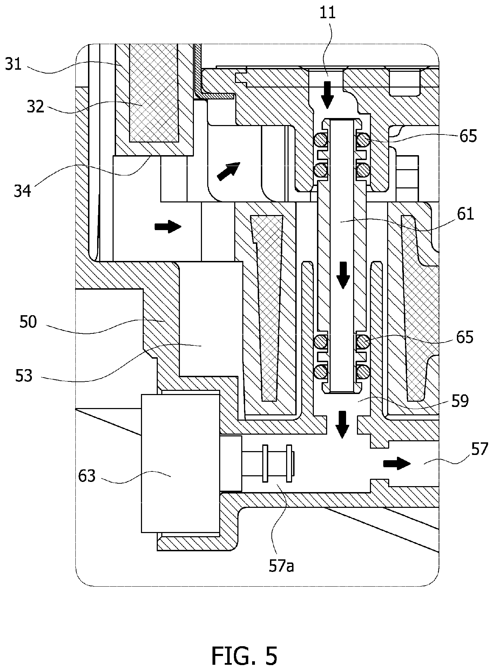

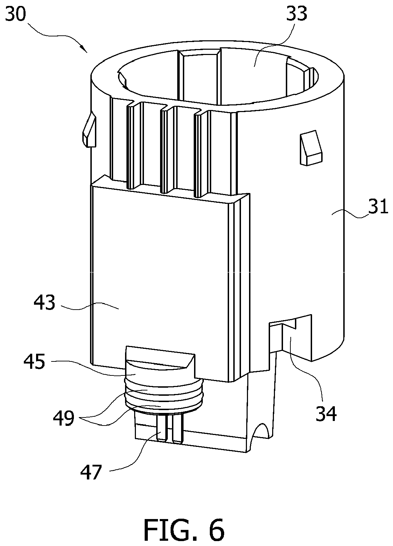

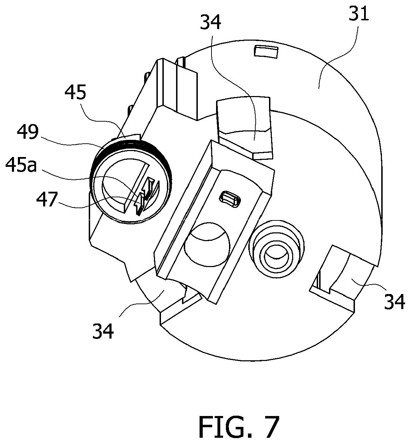

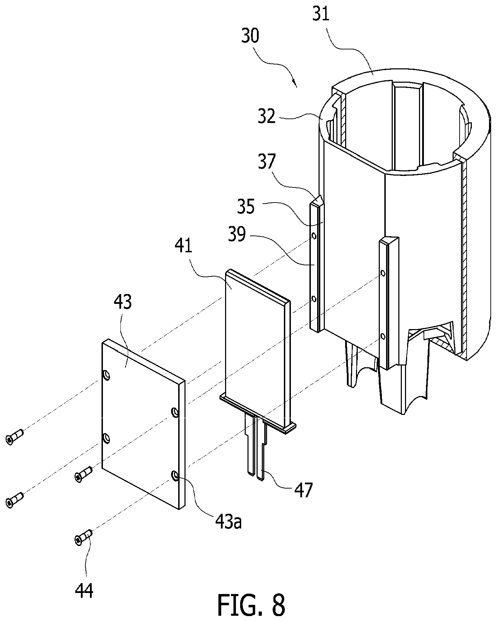

FIG. 5 is a cross-sectional view of a flange of the heating structure according to an embodiment of the present invention, wherein arrows represent the flow of the liquid. FIG. 6 is a perspective view of a heating member of the heating structure according to an embodiment of the present invention. FIG. 7 is a bottom perspective view of the heating member of the heating structure according to an embodiment of the present invention. FIG. 8 is a perspective view of a positive temperature coefficient (PTC) device coupled to a body of the heating structure according to an embodiment of the present invention.

Referring to FIGS. 5 through 8, in an embodiment of the present invention, the heating member 30 may include a housing 31, a body 32, and a PTC device 41.

The heating structure 1 according to an embodiment of the present invention may transfer heat to the PTC device 41, at least a part of the pump 9, and at least a part of the first discharge tube 11 and the second discharge tube 57 so as to melt the frozen aqueous urea solution 5.

In addition, when electrical overload is applied to the PTC device 41 due to characteristics of the PTC device 41, power is cut off so that damage caused by electrical overload can be prevented.

Meanwhile, referring to FIGS. 1 and 3, the body 32 may extend in an inward direction of the tank 7, and for example, the body may extend in a vertical direction of the tank, as illustrated in FIG. 3.

In an embodiment of the present invention, referring to FIG. 3, the body 32 that transfers heat may be installed in the housing 31. The housing 31 may be a resin injection-molded product manufactured by injection molding the body 32 using a resin. Thus, the shape of the body 32 and the shape of the housing 31 may be the same.

In addition, referring to FIGS. 3 through 5, an accommodation groove 33 may be formed in one end of the body 32 that opens in the inward direction of the tank 7, for example, in one end of the body 32 that opens in an upward direction of the tank, as illustrated in FIG. 3.

In this case, the pump 9 may be vertically inserted into the accommodation groove 33 formed in the body 32. In addition, a plurality of first inlets 34 may be formed on a lower side surface of the body 32, as illustrated in FIG. 7, and the plurality of first inlets may be connected to the suction tube 12 of the pump 9.

In this case, the aqueous urea solution 5 may pass through the first inlets 34 of the body 32 and may be introduced into the inside of the pump via the suction tube 12 of the pump 9.

Referring to FIG. 6, the body 32 may be formed of aluminum and may have a cylindrical shape with circular cross-sections. However, the body 32 may have one side surface with a plate shape so that the PTC device 41 can be coupled to the outside surface of the body 32.

In addition, the body 32 includes the pump 9 disposed therein and thus surrounds the pump so that heat generated in the body can be directly transferred to the pump.

In this case, the PTC device 41 may have a plate shape with rectangular cross-sections, as illustrated in FIG. 8, and may generate heat by supplied electrical energy due to characteristics of the PTC device.

Meanwhile, referring to FIG. 8, in an embodiment of the present invention, a mounting groove 35 may be formed in one side surface of the body 32 so that the PTC device 41 can be inserted into the body 32 through the mounting groove 35. In addition, a wall portion 37 may protrude from a circumference of the mounting groove 35.

In an embodiment of the present invention, the PTC device 41 may be coupled to the body 32 through a cover 43. In this case, the cover 43 may cover and seal the PTC device 41 and simultaneously may enable the PTC device to be coupled to the body 32.

Referring to FIG. 8, the cover 43 may have rectangular cross-sections but may have any shape in which the cover 43 covers and seals the PTC device 41.

In addition, the cover 43 may include a screw hole 43a formed in a corner of the cover so that the PTC device 41 can be coupled to the body 32 using a bolt 44 through the screw hole 43a.

Meanwhile, referring to FIG. 8, in an embodiment of the present invention, the cover 43 may be coupled to the wall portion 37 that protrudes from the circumference of the mounting groove 35. The cover 43 may be coupled to the wall portion 37 to cover and seal the PTC device 41. Thus, the PTC device can be fixed to the body 32.

In this case, a gasket 39 may be installed between the wall portion 37 and the cover 43 to seal a space between the wall portion and the cover. The gasket 39 may enable the aqueous urea solution 5 not to be permeated into the PTC device 41.

Meanwhile, the heating structure 1 according to an embodiment of the present invention may include a power cutoff unit (not shown).

The power cutoff unit may be a power sensor, and the power sensor may be electrically connected to the PTC device 41 so that, when the PTC device is at a Curie temperature or higher, the power sensor may cutoff power supplied to the PTC device. In this case, the Curie temperature is a temperature at which a material loses magnetism.

Referring to FIG. 8, a plug 47 may be formed on a lower end of the PTC device 41 to supply electrical energy to the PTC device. The plug 47 is electrically connected to the PTC device 41.

Referring to FIGS. 6 through 8, a protrusion 45 may be formed on one side of the PTC device 41 and may protrude toward the flange 50.

An insertion hole 45a may be formed in one end of the protrusion 45, i.e., in a lower surface of the protrusion, as illustrated in FIG. 7, so that the plug 47 can be inserted into and pass through the insertion hole 45a. In this case, the plug 47 may be inserted into the insertion hole 45a and may be exposed to the outside of the protrusion.

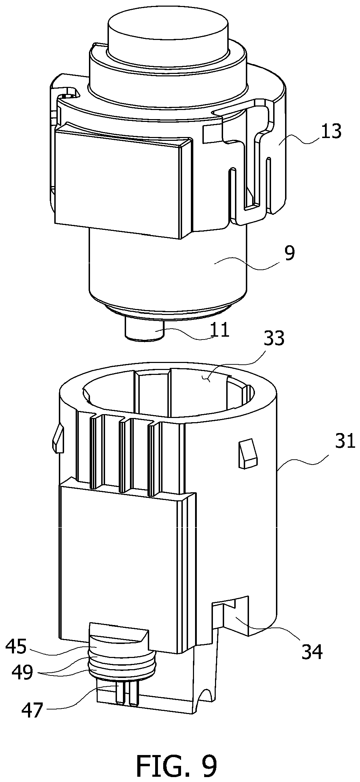

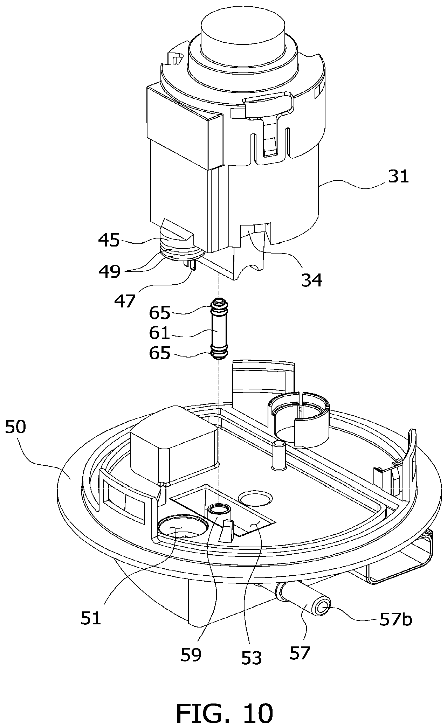

FIG. 9 is a perspective view of a pump installed at the heating member of the heating structure according to an embodiment of the present invention. FIG. 10 is a perspective view of the heating member of the heating structure according to an embodiment of the present invention installed at the flange.

Referring to FIG. 10, a first groove 51 may be recessed in one surface of the flange 50 so that the protrusion 45 can be inserted into the one surface of the flange 50 through the first groove 51. In addition, a socket 55 to be coupled to the plug 47 may be formed in the center of the first groove 51.

Referring to FIGS. 9 and 10, the protrusion 45 and the first groove 51 may have corresponding shapes. For example, the protrusion 45 and the insertion hole 45a may have circular cross-sections, as illustrated in FIG. 10.

In addition, a radius of an outer circumferential surface of the protrusion 45 and a radius of the first groove 51 may be formed in such a way that, when the protrusion is inserted into the first groove, the plug 47 and the socket 55 can be sealed at the radius of the outer circumferential surface of the protrusion 45 and the radius of the first groove 51. That is, the radius of the outer circumferential surface of the protrusion 45 may be smaller than the radius of the first groove 51.

In addition, a first sealing member 49 may be formed on the outer circumferential surface of the protrusion 45 so as to seal the first groove and the protrusion when the protrusion is inserted into the first groove 51.

Meanwhile, referring to FIGS. 2 through 4, the flange 50 may be installed on one surface of the interior of the tank 7, i.e., on the lower side surface of the tank, as illustrated in FIG. 2, to block a hole (not shown) formed in a lower portion of the tank. That is, the flange 50 may be mounted on the lower portion of the tank 7 so that installation of the flange 50 is simple.

In this case, referring to FIG. 3, the pump 9, the heating member 30, the filter 15, and the coupling member 13 may be installed on an upper portion of the flange 50 and may be fixed to the interior of the tank 7. In addition, a lower portion of the flange 50 may be exposed to the outside of the tank 7 so that the aqueous urea solution 5 can be discharged to the outside of the tank.

Referring to FIGS. 3 and 4, the flange 50 may have a cross section in a shape of a circular plate and may protrude in a downward direction of the circular plate. Embodiments of the present invention are not limited thereto.

Referring to FIG. 4, the first groove 51 and a second groove 53 may be formed in a top surface of the flange 50, and a connection tube 59 may be provided in the second groove. In addition, a second discharge tube 57 connected to the connection tube 59 may be provided on a lower side of the flange 50.

Referring to FIG. 4, in an embodiment of the present invention, the second groove 53 of the flange 50 may be formed in one surface of the flange, for example, in the top surface of the flange.

Referring to FIGS. 4 and 5, at least a part of the first discharge tube 11 formed on the lower side surface of the pump 9 may be accommodated in the second groove 53.

Meanwhile, referring to FIGS. 4 and 5, one end of the body 32, for example, a lower end of the body 32 may be accommodated in the second groove 53 together with at least a part of the first discharge tube 11.

In this case, the body 32 may protrude in such a way that a part of the lower end of the body 32 can be inserted into the second groove 53. In addition, at least a part of the first discharge tube 11 may be heated by the protruding body 32.

Referring to FIG. 3, the second discharge tube 57 is a passage through which the aqueous urea solution 5 is discharged to the outside of the flange 50. Meanwhile, one end of the body 32 may be formed to heat a part of the second discharge tube 57.

That is, the lower end of the protruding body 32 may extend in a horizontal direction to heat a part of the second discharge tube 57.

In this case, the lower end of the protruding body 32 may be formed to correspond to the shape of the second discharge tube so as to heat a part of the second discharge tube 57. As illustrated in FIG. 4, the shape of the second discharge tube 57 may be a circular tube shape, and in this case, the lower end of the body having a semicircular shape may be formed to surround a part of an upper side of the second discharge tube 57.

Referring to FIGS. 4 and 5, in an embodiment of the present invention, the second discharge tube 57 may be formed on the other side of the flange 50, for example, on the lower side of the flange, as illustrated in FIG. 4.

In this case, a second inlet 57a of the second discharge tube 57 may be connected to the connection tube 59, and a discharge port 57b of the second discharge tube 57 may extend in the horizontal direction, may pass through side surfaces of the flange 50 and may be exposed to the outside of the flange 50, as illustrated in FIG. 4.

Meanwhile, in an embodiment of the present invention, the flange 50 may include the connection tube 59 that is formed in the inside of the second groove 53 and connects the first discharge tube 11 to the second discharge tube 57, as illustrated in FIGS. 4 and 5.

In this case, the connection tube 59 may protrude from the inside of the second groove 53 toward the heating member 30.

Meanwhile, referring to FIGS. 5 and 10, a discharge tube 61 may be vertically installed in the connection tube 59. In this case, the discharge tube 61 may have a linear shape and may be coupled to the first discharge tube 11 of the pump 9.

In this case, a second sealing member 65 may be formed on an outer circumferential surface of the discharge tube 61 so as to seal a space between the discharge tube 61 and the connection tube 59.

Meanwhile, as illustrated in FIG. 5, a pressure sensor 63 may be mounted on the second inlet 57a of the second discharge tube 57. The pressure sensor 63 compares a current actual measurement pressure with a target pressure to feedback control the pressure of the aqueous urea solution 5 in real time.

In an embodiment of the present invention, the first discharge tube 11, the second discharge tube 57, the connection tube 59, and the discharge tube 61 may have a tubular shape with circular cross-sections so that the aqueous urea solution 5 can flow therethrough. However, embodiments of the present invention are not limited thereto.

Meanwhile, the heating structure 1 according to an embodiment of the present invention may include a temperature sensor (not shown) that is installed on one surface of the flange 50 and detects the temperature of the aqueous urea solution 5 that is a liquid.

In this case, in an embodiment of the present invention, the temperature sensor may detect the temperature of the aqueous urea solution 5 inside the tank 7 to control an operation of the heating structure 1 and to maintain a constant temperature of the aqueous urea solution around the pump 9.

In an embodiment of the present invention, the first sealing member 49 and the second sealing member 65 may seal the first groove 51 and the protrusion and the space between the discharge tube 61 and the connection tube 59, respectively, so that the aqueous urea solution 5 does not permeate into the heating structure 1 and the pump module 3 including the same.

In this case, the first sealing member 49 and the second sealing member 65 may be compressed at a set compression ratio, may have set thicknesses, and may be manufactured in the form of an O-ring formed of fluorine silicon, for example.

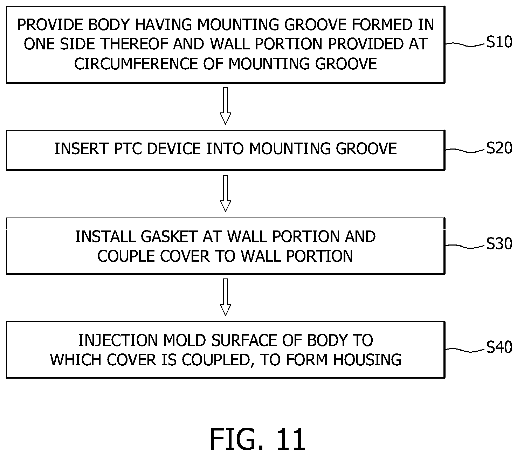

FIG. 11 is a flowchart illustrating a production method for the heating structure, according to an embodiment of the present invention.

Referring to FIG. 11, the production method for the heating structure may include providing a body having a mounting groove formed in one side surface thereof and a wall portion provided at a circumference of the mounting groove (S10), inserting a PTC device into the mounting groove (S20), installing a gasket at the wall portion and coupling a cover to the wall portion (S30), and injection molding the surface of the body to which the cover is coupled, to form a housing (S40).

Thus, the PTC device 41 in a sealed state may be installed at the body 32. Also, the surface of the body 32 having the PTC device 41 installed therein may be injection-molded to form the housing 31.

Meanwhile, in providing of the body having the mounting groove formed in one side surface thereof and the wall portion provided at the circumference of the mounting groove (S10), the mounting groove 35 may be formed in one side surface of the body 32, and the wall portion 37 protrudes from the circumference of the mounting groove.

In addition, in inserting of the PTC device into the mounting groove (S20), the PTC device 41 is inserted into and is installed in the mounting groove 35. In this case, the area of the mounting groove 35 may be greater than or the same as the area of the PTC device 41.

Meanwhile, in installing of the gasket at the wall portion and coupling the cover to the wall portion (S30), the gasket 39 is installed at or applied to the protruding wall portion 37, and the cover 43 is coupled to the wall portion having the gasket installed therein, to seal the PTC device 41.

In addition, in injection molding of the surface of the body to which the cover is coupled, to form the housing (S40), the PTC device 41 is installed to inject a molding material into the body 32 to which the cover 43 is coupled, and to manufacture the housing 31.

In this case, the housing 31 may have the same shape as that of the body 32. However, embodiments of the present invention are not limited thereto.

Meanwhile, the heating member 30 may include the housing 31, the body 32, and the PTC device 41.

In a heating structure according to an embodiment of the present invention and a production method therefor, a PTC device capable of heating an aqueous urea solution that is easily frozen in the winter season is provided so that the frozen aqueous urea solution can be melted.

In a pump module according to an embodiment of the present invention, a strongly alkaline aqueous urea solution can be stably pumped using an injector.

In a heating structure according to an embodiment of the present invention and a pump module including the same, a flange mounted on a lower portion of a tank is provided so that installation of the heating structure in the pump module is simple.

In a heating structure according to an embodiment of the present invention, a body is formed to heat a part of a first discharge tube and a part of a second discharge tube so that the frozen aqueous urea solution that is present in the discharge tube to be discharged to the outside of the pump module can be efficiently melted.

While the invention has been shown and described with reference to certain exemplary embodiments thereof, it will be understood by those skilled in the art that various changes in form and details may be made therein without departing from the scope of the invention as defined by the appended claims.

### [Industrial Applicability]

In a heating structure according to an embodiment of the present invention and a production method therefor, a PTC device capable of heating an aqueous urea solution is provided so that the frozen aqueous urea solution can be melted and damage caused by electrical overload can be prevented.

In a pump module according to an embodiment of the present invention, a strongly alkaline aqueous urea solution can be stably pumped using an injector.

In a heating structure according to an embodiment of the present invention and a pump module including the same, a flange mounted on a lower portion of a tank is provided so that installation of the heating structure in the pump module is simple.

In a heating structure according to an embodiment of the present invention, a body is formed to heat a part of a first discharge tube and a part of a second discharge tube so that the frozen aqueous urea solution that is present in the discharge tube can be efficiently melted.

## Claims

1. A pump module (3) comprising:
a pump (9) installable in a storage tank (7) so as to discharge a liquid stored in the storage tank (7) to the outside of the storage tank (7);
a flange (50) installable on one surface of the interior of the storage tank (7);
a heating member (30) disposed to surround an outside surface of the pump (9) and coupled to one surface of the flange (50) and provided on one side thereof with an accommodation groove (33) in which at least a part of the pump (9) is accommodated;
a coupling member (13) coupled to an outside of the pump (9) so as to couple the heating member (30) to the flange (50); and
a filter (15) coupled to the flange (50) to surround the pump (9), the coupling member (13) and the heating member (30) and filtering the liquid supplied to the pump (9),
wherein a first discharge tube (11) of the pump (9) having at least a part thereof accommodated in the accommodation groove (33) extends toward the flange (50) and is connectable to a second discharge tube (57) formed on the other surface of the flange (50) outside the storage tank (7), and the heating member (30) is formed to heat at least a part of the pump (9), at least a part of the first discharge tube (11), and at least a part of the second discharge tube (57).

2. The pump module of claim 1, wherein the heating member comprises:
a body (32) that extends in an inward direction of the storage tank; and
a positive temperature coefficient (PTC) device (41) coupled to an outside surface of the body, and
the accommodation groove is formed in an end that opens in the inward direction of the storage tank of the body.

3. The pump module of claim 2, further comprising a cover (43) coupled to the body so as to cover and seal the PTC device.

4. The pump module of claim 2, wherein a protrusion (45) is formed on one side of the PTC device and protrudes toward the flange, and a plug (47) connected to the PTC device is formed on an end of the protrusion, and a first groove (51) is recessed in the one surface of the flange so that the protrusion is inserted into the first groove, and a socket (55) corresponding to the plug is formed in a center of the first groove.

5. The pump module of claim 4, further comprising a first sealing member (49) formed on an outer circumferential surface of the protrusion.

6. The pump module of claim 3, further comprising:
a mounting groove (35) formed in one side surface of the body so that the PTC device is inserted into the body through the mounting groove; and
a wall portion (37) formed at an edge of the mounting groove,
wherein the cover is coupled to the wall portion to cover and seal the PTC device and to fix the PTC device to the body.

7. The pump module of claim 6, further comprising a gasket (39) disposed between the wall portion and the cover and sealing a space between the wall portion and the cover.

8. The pump module of claim 2, further comprising a power cutoff unit that cuts off power supplied to the PTC device when the power cutoff unit is electrically connected to the PTC device and the PTC device is at a Curie temperature or higher.

9. The pump module of claim 1, further comprising a temperature sensor that is installed on one surface of the flange and detects a temperature of the liquid.

10. The pump module of claim 2, wherein a second groove (53) is formed in one surface of the flange to accommodate at least a part of the first discharge tube, and one end of the body capable of heating at least a part of the first discharge tube is accommodated in the second groove together with at least a part of the first discharge tube.

11. The pump module of claim 2, wherein one end of the body is formed to heat a part of the second discharge tube.

12. The pump module of claim 11, wherein a connection tube (59) is formed in the second groove of the flange, protrudes from an interior of the second groove of the flange, extends toward the heating member and connects the first discharge tube to the second discharge tube.

13. The pump module of claim 12, further comprising a linear discharge tube (61) coupled to the first discharge tube, wherein the discharge tube is disposed in the connection tube while being coupled to the first discharge tube.

14. The pump module of claim 13, further comprising a second sealing member (65) formed at an outer circumferential surface of the discharge tube so as to seal a space between the discharge tube and the connection tube.

15. The pump module of claim 1, wherein the storage tank is for storing an aqueous urea solution.

## Patentansprüche

1. Pumpenmodul (3), das Folgendes umfasst:
eine Pumpe (9), die in einem Speicherbehälter (7) so installiert werden kann, dass sie eine in dem Speicherbehälter (7) aufbewahrte Flüssigkeit zur Außenseite des Speicherbehälters (7) abgibt;
einen Flansch (50), der auf einer Oberfläche der Innenseite des Speicherbehälters (7) installierbar ist;
ein Heizelement (30), das so angeordnet ist, dass es eine Außenfläche der Pumpe (9) umgibt und mit einer Oberfläche des Flansches (50) gekoppelt und auf einer Seite mit einer Aufnahmenut (33) versehen ist, in der wenigstens ein Teil der Pumpe (9) aufgenommen ist;
ein Kopplungselement (13), das mit einer Außenseite der Pumpe (9) so gekoppelt ist, dass das Heizelement (30) mit dem Flansch (50) gekoppelt ist; und
ein Filter (15), das so mit dem Flansch (50) gekoppelt ist, dass es die Pumpe (9), das Kopplungselement (13) und das Heizelement (30) umgibt und die der Pumpe (9) zugeführte Flüssigkeit filtert,
wobei ein erstes Druckrohr (11) der Pumpe (9) mit wenigstens einem Teil, das in der Aufnahmenut (33) aufgenommen ist, sich in Richtung des Flansches (50) erstreckt und mit einem zweiten Druckrohr (57) verbindbar ist, das auf der anderen Oberfläche des Flansches (50) außerhalb des Speicherbehälters (7) ausgebildet ist, und das Heizelement (30) so ausgebildet ist, dass es wenigstens einen Teil der Pumpe (9), wenigstens einen Teil des ersten Druckrohrs (11) und wenigstens einen Teil des zweiten Druckrohrs (57) erhitzt.

2. Pumpenmodul nach Anspruch 1, wobei das Heizelement Folgendes umfasst:
einen Körper (32), der sich in einer Einwärtsrichtung des Speicherbehälters erstreckt; und
eine PTC-(positiver Temperaturkoeffizient)-Vorrichtung (41), die mit einer Außenfläche des Körpers gekoppelt ist, und
die Aufnahmenut in einem Ende ausgebildet ist, das sich in Einwärtsrichtung des Speicherbehälters des Körpers öffnet.

3. Pumpenmodul nach Anspruch 2, das ferner eine Abdeckung (43) umfasst, die mit dem Körper gekoppelt ist, um die PTC-Vorrichtung abzudecken und abzudichten.

4. Pumpenmodul nach Anspruch 2, wobei ein Vorsprung (45) auf einer Seite der PTC-Vorrichtung ausgebildet ist und in Richtung des Flansches vorsteht, und ein mit der PTC-Vorrichtung verbundener Stecker (47) an einem Ende des Vorsprungs ausgebildet ist, und eine erste Nut (51) in die eine Oberfläche des Flansches so eingelassen ist, dass der Vorsprung in die erste Nut eingesetzt wird, und eine dem Stecker entsprechende Buchse (55) in einem Zentrum der ersten Nut ausgebildet ist.

5. Pumpenmodul nach Anspruch 4, das ferner ein erstes Abdichtungselement (49) umfasst, das auf einer äußeren Umfangsfläche des Vorsprungs ausgebildet ist.

6. Pumpenmodul nach Anspruch 3, das ferner Folgendes umfasst:
eine Befestigungsnut (35), die in einer Seitenfläche des Körpers ausgebildet ist, so dass die PTC-Vorrichtung durch die Befestigungsnut in den Körper eingesetzt wird; und
einen Wandabschnitt (37), der an einem Rand der Befestigungsnut ausgebildet ist,
wobei die Abdeckung mit dem Wandabschnitt gekoppelt ist, um die PTC-Vorrichtung abzudecken und abzudichten und die PTC-Vorrichtung am Körper zu fixieren.

7. Pumpenmodul nach Anspruch 6, das ferner eine Dichtung (39) umfasst, die zwischen dem Wandabschnitt und der Abdeckung angeordnet ist und einen Raum zwischen dem Wandabschnitt und der Abdeckung abdichtet.

8. Pumpenmodul nach Anspruch 2, das ferner eine Stromabschalteinheit umfasst, die den der PTC-Vorrichtung zugeführten Strom abschaltet, wenn die Stromabschalteinheit mit der PTC-Vorrichtung elektrisch verbunden ist und die PTC-Vorrichtung auf einer Curie-Temperatur oder darüber ist.

9. Pumpenmodul nach Anspruch 1, das ferner einen Temperatursensor umfasst, der auf einer Oberfläche des Flansches installiert ist und eine Temperatur der Flüssigkeit erfasst.

10. Pumpenmodul nach Anspruch 2, wobei eine zweite Nut (53) in einer Oberfläche des Flansches ausgebildet ist, um wenigstens einen Teil des ersten Druckrohrs aufzunehmen, und ein Ende des Körpers, das wenigstens einen Teil des ersten Druckrohrs erhitzen kann, in der zweiten Nut zusammen mit wenigstens einem Teil des ersten Druckrohrs aufgenommen ist.

11. Pumpenmodul nach Anspruch 2, wobei ein Ende des Körpers so ausgestaltet ist, dass ein Teil des zweiten Druckrohrs erhitzt wird.

12. Pumpenmodul nach Anspruch 11, wobei ein Verbindungsrohr (59) in der zweiten Nut des Flansches ausgebildet ist, von einem Innern der zweiten Nut des Flansches vorsteht, sich in Richtung des Heizelements erstreckt und das erste Druckrohr mit dem zweiten Druckrohr verbindet.

13. Pumpenmodul nach Anspruch 12, das ferner ein geradliniges Druckrohr (61) umfasst, das mit dem ersten Druckrohr gekoppelt ist, wobei das Druckrohr im Verbindungsrohr angeordnet ist, während es mit dem ersten Druckrohr gekoppelt ist.

14. Pumpenmodul nach Anspruch 13, das ferner ein zweites Abdichtungselement (65) umfasst, das an einer äußeren Umfangsfläche des Druckrohrs ausgebildet ist, um einen Raum zwischen dem Druckrohr und dem Verbindungsrohr abzudichten.

15. Pumpenmodul nach Anspruch 1, wobei der Speicherbehälter zum Aufbewahren einer wässrigen Harnstofflösung vorgesehen ist.

## Revendications

1. Module de pompe (3) comportant :
une pompe (9) en mesure d'être installée dans un réservoir de stockage (7) de manière à évacuer un liquide stocké dans le réservoir de stockage (7) vers l'extérieur du réservoir de stockage (7) ;
une bride (50) en mesure d'être installée sur une surface de la partie intérieure du réservoir de stockage (7) ;
un élément chauffant (30) disposé pour entourer une surface extérieure de la pompe (9) et accouplé au niveau d'une surface de la bride (50) et comportant sur un côté de celui-ci une rainure de réception (33) dans laquelle au moins une partie de la pompe (9) est reçue ;
un élément d'accouplement (13) accouplé au niveau d'une partie extérieure de la pompe (9) de manière à accoupler l'élément chauffant (30) à la bride (50) ; et
un filtre (15) accouplé à la bride (50) pour entourer la pompe (9), l'élément d'accouplement (13) et l'élément chauffant (30) et servant à filtrer le liquide fourni à la pompe (9),
dans lequel un premier tube d'évacuation (11) de la pompe (9) ayant au moins une partie de celui-ci reçue dans la rainure de réception (33) s'étend vers la bride (50) et est en mesure d'être raccordé à un deuxième tube d'évacuation (57) formé sur l'autre surface de la bride (50) à l'extérieur du réservoir de stockage (7), et l'élément chauffant (30) est formé pour chauffer au moins une partie de la pompe (9), au moins une partie du premier tube d'évacuation (11), et au moins une partie du deuxième tube d'évacuation (57).

2. Module de pompe selon la revendication 1, dans lequel l'élément chauffant comporte :
un corps (32) qui s'étend dans une direction allant vers l'intérieur du réservoir de stockage ; et
un dispositif PTC (positive temperature coefficient - coefficient de température positif) (41) accouplé au niveau d'une surface extérieure du corps, et
la rainure de réception est formée dans une extrémité qui s'ouvre dans la direction allant vers l'intérieur du réservoir de stockage du corps.

3. Module de pompe selon la revendication 2, comportant par ailleurs un couvercle (43) accouplé au corps de manière à couvrir et à sceller le dispositif PTC.

4. Module de pompe selon la revendication 2, dans lequel une partie saillante (45) est formée sur un côté du dispositif PTC et fait saillie vers la bride, et un bouchon (47) raccordé au dispositif PTC est formé sur une extrémité de la partie saillante, et une première rainure (51) est en retrait dans ladite une surface de la bride de telle sorte que la partie saillante est insérée dans la première rainure, et une prise (55) correspondant au bouchon est formée dans un centre de la première rainure.

5. Module de pompe selon la revendication 4, comportant par ailleurs un premier élément d'étanchéité (49) formé sur une surface circonférentielle extérieure de la partie saillante.

6. Module de pompe selon la revendication 3, comportant par ailleurs :
une rainure de montage (35) formée dans une surface latérale du corps de telle sorte que le dispositif PTC est inséré dans le corps au travers de la rainure de montage ; et
une partie de paroi (37) formée au niveau d'un bord de la rainure de montage,
dans lequel le couvercle est accouplé à la partie de paroi pour couvrir et sceller le dispositif PTC et pour fixer le dispositif PTC au corps.

7. Module de pompe selon la revendication 6, comportant par ailleurs un joint d'étanchéité (39) disposé entre la partie de paroi et le couvercle et scellant un espace entre la partie de paroi et le couvercle.

8. Module de pompe selon la revendication 2, comportant par ailleurs une unité de coupure d'alimentation qui coupe l'alimentation fournie au dispositif PTC quand l'unité de coupure d'alimentation est raccordée électriquement au dispositif PTC et quand le dispositif PTC est à une température de Curie ou plus.

9. Module de pompe selon la revendication 1, comportant par ailleurs un capteur de température qui est installé sur une surface de la bride et qui détecte une température du liquide.

10. Module de pompe selon la revendication 2, dans lequel une deuxième rainure (53) est formée dans une surface de la bride pour recevoir au moins une partie du premier tube d'évacuation, et une extrémité du corps en mesure de chauffer au moins une partie du premier tube d'évacuation est reçue dans la deuxième rainure ainsi qu'avec au moins une partie du premier tube d'évacuation.

11. Module de pompe selon la revendication 2, dans lequel une extrémité du corps est formée pour chauffer une partie du deuxième tube d'évacuation.

12. Module de pompe selon la revendication 11, dans lequel un tube de raccordement (59) est formé dans la deuxième rainure de la bride, fait saillie depuis une partie intérieure de la deuxième rainure de la bride, s'étend vers l'élément chauffant et raccorde le premier tube d'évacuation au deuxième tube d'évacuation.

13. Module de pompe selon la revendication 12, comportant par ailleurs un tube d'évacuation linéaire (61) accouplé au premier tube d'évacuation, dans lequel le tube d'évacuation est disposé dans le tube de raccordement tout en étant accouplé au premier tube d'évacuation.

14. Module de pompe selon la revendication 13, comportant par ailleurs un deuxième élément d'étanchéité (65) formé au niveau d'une surface circonférentielle extérieure du tube d'évacuation de manière à sceller un espace entre le tube d'évacuation et le tube de raccordement.

15. Module de pompe selon la revendication 1, dans lequel le réservoir de stockage est destiné à stocker une solution aqueuse d'urée.
